**Europäisches Patentamt**

**European Patent Office**

**Office européen des brevets**

(19)

(11) Veröffentlichungsnummer : **0 014 902 B1**

(12) **EUROPÄISCHE PATENTSCHRIFT**

(45) Veröffentlichungstag der Patentschrift :
11.05.83

(21) Anmeldenummer : 80100618.0

(22) Anmeldetag : 07.02.80

(51) Int. Cl.³ : **H 01 F   1/11, C 01 G 49/06,
G 11 B   5/68**

(54) **Verfahren zur Herstellung von nadelförmigem kobalthaltigem magnetischem Eisenoxid.**

(30) Priorität : 13.02.79 DE 2905352

(43) Veröffentlichungstag der Anmeldung :
03.09.80 Patentblatt 80/18

(45) Bekanntmachung des Hinweises auf die Patenterteilung : 11.05.83 Patentblatt 83/19

(84) Benannte Vertragsstaaten :
DE FR GB IT

(56) Entgegenhaltungen :
FR A 2 380 225
FR A 2 387 912
FR A 2 397 049
US A 4 112 184
JOURNAL OF APPLIED PHYSICS, Band 50, Nr. 1,
Januar 1979, Seiten 450-452 M. KISHIMOTO et
al. : « Coercivity of gamma-Fe₂O₃ particles
growing iron-cobalt ferrite »

Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Rudolf, Peter, Dr.
Wiesenstrasse 11
D-6701 Neuhofen (DE)
Erfinder : Steck, Werner, Dr.
Lorscher Strasse 3
D-6704 Mutterstadt (DE)
Erfinder : Koester, Eberhard, Dr.
Max-Slevogt-Strasse 23
D-6710 Frankenthal (DE)
Erfinder : Ohlinger, Mangred, Dr.
Anselm-Feuerbach-Strasse 13
D-6710 Frankenthal (DE)
Erfinder : Jaeckh, Christof, Dr.
Max-Reger-Strasse 31
D-6900 Heidelberg (DE)

0 014 902

# Verfahren zur Herstellung von nadelförmigem kobalthaltigem magnetischem Eisenoxid

Die Erfindung betrifft ein Verfahren zur Herstellung von nadelförmigem, magnetischem Eisenoxid, bestehend aus einem Kern aus Gamma-Eisen(III)oxid und einer, bezogen auf die Gesamtmenge an magnetischem Material, 0,2 bis 12 Gewichtsprozent Kobalt(II)- und 0,1 bis 15 Gewichtsprozent Eisen(II)-Ionen enthaltenden Ferrit-Hülle.

Nadelförmiges Gamma-Eisen(III)oxid wird in großem Umfang als magnetisierbares Material bei der Herstellung von magnetischen Aufzeichnungsträgern seit langem eingesetzt. Durch die Fortentwicklung auf dem Gebiet der Aufzeichnungstechnik wurde jedoch zunehmend nach magnetischen Materialien gesucht, die sich vor allem durch eine höhere Koerzitivkraft gegenüber dem Gamma-Eisen(III)-oxid auszeichnen. Es war zwar bekannt, daß sich die Koerzitivkraft von Eisen-oxiden durch die Dotierung mit Kobalt u. U. beträchtlich erhöhen läßt, doch zeigen solche Materialien eine Reihe von unerwünschten Eigenschaften. Hierzu gehören insbesondere die thermische und mechanische Instabilität von Remanenz und Koerzitivkraft. Materialien mit solchen Nachteilen sind jedoch für den Einsatz bei magnetischen Aufzeichnungsträgern ungeeignet.

Diese kobalthaltigen nadelförmigen Eisenoxide sind nach einer Reihe von Verfahren zugänglich. Nach den deutschen Patentschriften 1 112 725 und 1 226 997 ist die Kobaltdotierung durch eine gemeinsame Fällung von Eisen- und Kobalthydroxid bei der Goethitherstellung in einfacher Weise möglich, da die anschließende Umwandlung des kobalthaltigen Goethits in das entsprechende Gamma-Eisen(III)oxid auf übliche Weise geschieht. In ähnlicher Weise wird auch gemäß der DE-OS 21 00 390 vorgegangen.

Nach der DE-AS 20 36 612 kann eine Kobaltverbindung auch auf die Oberfläche eines Gamma-Eisen(II)oxids aufgefällt werden. Mittels einer anschließenden Temperaturbehandlung bei 380 bis 400 °C wird das Kobalt in das Eisenoxidgitter eingebaut. In anderer Weise wird bei dem in der DE-OS 22 43 231 offenbarten Verfahren vorgegangen. Hier wird das nadelförmige Eisenoxidhydrat vor der Reduktion zum Magnetit mit einem Schutzüberzug zur Vermeidung des Zusammensinterns der Nadeln versehen und dann nach dem Aufbringen der Kobaltverbindung auf den Magnetit oder das Gamma-Eisenoxid einer Temperbehandlung unterzogen. Einen weiteren Weg zu kobalthaltigen nadelförmigen Eisenoxiden beschreibt die DE-OS 20 22 013. Danach wird nadelförmiges FeOOH oder $Fe_2O_3$ mit einer eine Kobaltverbindung enthaltenden Flüssigkeit gemischt, der Schlamm getrocknet und die Masse dann nach bekannten Verfahren entweder in Gamma-Eisen(III)oxid umgewandelt oder, für den Fall, daß bereits Gamma-Eisen-(III)-oxid eingesetzt wurde, lediglich gesintert. Außerdem ist es bekannt (DE-AS 19 07 236), kobalthaltiges nadelförmiges Gamma-Eisen(III)-oxid dadurch herzustellen, daß Gamma-Eisen(III)oxid direkt oder eines im Rahmen dessen Herstellung erhaltenes Oxid in wäßrigem Medium suspendiert, eine Kobaltverbindung aufgefällt oder anschließend auf eine Temperatur erwärmt wird, die zur Zersetzung der Kobaltverbindung ausreicht. Auch die teilweise Reduktion der nach diesem Verfahren erhaltenen kobaltdotierten Gamma-Eisen(III)oxide wird zur Erhöhung der Koerzitivkraft vorgeschlagen.

Auch ist bereits versucht worden, die Koerzitivfeldstärke von Eisenoxiden dadurch zu erhöhen, daß die entsprechenden nadelförmigen Oxide mit einer Epitaxialschicht aus Kobaltferrit umhüllt werden (GB-PS 1 441 183). In ähnlicher Weise wird auch bei dem Verfahren nach der DE-OS 28 11 473 vorgegangen. Hier wird durch ein gleichzeitiges Aufbringen von Kobalt- und Eisen-Ionen auf das Eisenoxid und vorsichtiger Oxidation die Kobaltferrit-Schicht hergestellt. Eine Kobalt(II)- und Eisen(II)-Ionen enthaltende ferritische Hülle wird nach dem Verfahren der FR-A-2 380 225 durch Zugabe von Basen in eine wäßrige Kobalt(II)- und Eisen(II)-Ionen enthaltende Suspension von Gamma-Eisen(III)oxid, Erhitzen der Suspension, Abfiltrieren und Auswaschen des Feststoffanteils der Suspension sowie durch anschließendes Trocknen und Tempern auf den Gamma-Eisen(III)oxid-Kern aufgebracht.

Die nach dem Stand der Technik hergestellten kobalthaltigen nadelförmigen Eisenoxide sind in ihren magnetischen Eigenschaften nicht voll befriedigend und meist thermisch und/oder mechanisch instabil. Eine wünschenswert hohe Koerzitivfeldstärke wird nur durch eine Variation des relativ hohen Anteils an Kobalt erreicht, welcher dann zu den bekannten Nachteilen führt. Auch die Verringerung der Kobaltmenge kombiniert mit einer Erhöhung der Behandlungstemperatur führt nicht zu Produkten, die bei der Verwendung für magnetische Aufzeichnungsträger, den erwarteten Anforderungen genügen.

Es bestand daher die Aufgabe, ein für die Verwendung als magnetisierbares Material in magnetischen Aufzeichnungsträgern geeignetes kobalthaltiges nadelförmiges magnetisches Eisenoxid in verfahrensmäßig einfacher Weise herzustellen, das sehr hohe Werte für die Koerzitivfeldstärke bei gleichzeitig geringer Temperaturabhängigkeit der magnetischen Eigenschaften sowie eine enge Schaltfeldstärkenverteilung aufweist.

Es wurde nun gefunden, daß sich nadelförmige magnetische Eisenoxide, bestehend aus einem Kern aus Gamma-Eisen(III)-oxid und einer diesen Kern umgebenden, bezogen auf die Menge an magnetischem Material, 0,2 bis 12 Gewichtsprozent Kobalt(II)- und 0,1 bis 15 Gewichtsprozent Eisen(II)-Ionen enthaltenden ferritischen Hülle durch Zugabe von Basen in eine wäßrige Kobalt(II)- und Eisen(II)-Ionen enthaltenden Suspension von Gamma-Eisen(III)oxid, Erhitzen der Suspension, Abfiltrieren und Auswaschen des Feststoffanteils der Suspension sowie anschließendes Trocknen und Tempern, mit den gewünschten Eigenschaften herstellen lassen, wenn dazu ein Gewichtsteil nadelförmiges Gamma-

2

**0 014 902**

Eisen(III)oxid durch intensives Rühren in nicht mehr als vier Gewichtsteilen Wasser suspendiert, dieser Suspension unter Inertgasabdeckung bei einer Temperatur von 20 bis 80 °C Kobalt(II)- und Eisen(II)-Ionen enthaltende wäßrige Lösungen, sowie wäßrige Basen zur Einstellung eines pH-Wertes von mindestens 10 unter weiterem Rühren zugegeben werden und nach dem unter Inertgasatmosphäre stattfindenden Ausfällen des hydroxidischen Kobalt(II)- und Eisen(II)-Niederschlags der gesamte Feststoffanteil abfiltriert, mit Wasser neutral gewaschen und während ein bis sieben Stunden auf eine Temperatur zwischen 100 und 220 °C erhitzt wird.

Diese nach dem erfindungsgemäßen Verfahren hergestellten nadelförmigen kobalthaltigen magnetischen Eisenoxide besitzen somit einen Kern aus dem eingesetzten Gamma-Eisen-(III)oxid und eine diesen Kern umhüllenden äußeren Schicht aus vorwiegend Magnetit und darin eingelagerten Kobalt(II)-ionen in Form von Kobaltferrit.

Als Ausgangsmaterialien für das erfindungsgemäße Verfahren eignen sich die nach bekannten Methoden hergestellten nadelförmigen magnetischen Gamma-Eisen(III)oxide. Diese Eisenoxid-Teilchen weisen eine mittlere Länge von 0,2 bis 1 μm und ein Verhältnis von Länge zu Dicke zwischen 6 : 1 bis 20 : 1 auf. Erhalten werden diese Teilchen durch Umwandlung von nadelförmigem Eisen(III)oxidhydrat in reduzierenden Atmosphäre zu Magnetit und anschließender Oxidation zum Gamma-Eisen(III)oxid bei Temperaturen unterhalb 400 °C. Gegebenenfalls kann zur Verbesserung der mechanischen und magnetischen Eigenschaften vor wie auch nach der Reduktion eine Temperbehandlung vorgenommen werden. Auch die Behandlung der verschiedenen Eisenoxid-Vorstufen bei der Herstellung des Gamma-Eisen(III)oxides mit anorganischen oder organischen Substanzen, z. B. zur Erhöhung der Formstabilität der Teilchen ist möglich und kann sich im besonderen Fall als vorteilhaft herausstellen. Die Herstellung eines geeigneten Gamma-Eisen(III)oxids läßt sich auch dadurch erreichen, daß ein nadelförmiges unmagnetisches Eisenoxid oder Eisenoxidhydrat mit höheren Kohlenwasserstoffen, höheren Alkoholen oder Aminen, Fettsäuren und deren Salze überzogen und bei einer Temperatur von etwa 400 bis 650 °C in Gegenwart von Luft umgewandelt wird.

Die für das erfindungsgemäße Verfahren noch erforderlichen Eisen(II)- und Kobalt(II)-Verbindungen müssen so ausgewählt werden, daß sie in wäßriger alkalischer Lösung nicht oxidierend wirken und die entsprechenden Hydroxide bilden. Zweckmäßigerweise werden die Chloride und Sulfate eingesetzt.

Zur Durchführung des erfindungsgemäßen Verfahrens wird das Gamma-Eisen(III)oxid in nichts mehr als vier, vorzugsweise 2 bis 3 Gewichtsteile Wasser durch intensives Rühren oder mittels anderer üblicher Geräte suspendiert. Für die weitere Verfahrensweise hat es sich als besonders zweckmäßig herausgestellt, in diese Suspension zuerst die Kobalt(II)-Ionen enthaltende wäßrige Lösung einzubringen. Durch die sich anschließende Zugabe wäßriger Basen, insbesondere Natriumhydroxid, wird der pH-Wert der Suspension auf mindestens 10, vorzugsweise auf mindestes 12 eingestellt. Nach etwa einstündigem Rühren schließt sich die Zugabe der wäßrigen Eisen(II)-Ionen enthaltenden Lösung an. Danach empfiehlt es sich noch längere Zeit intensiv zu rühren. Als vorteilhaft und ausreichend haben sich vier bis sieben Stunden erwiesen. Der gesamte Reaktionsablauf, insbesondere jedoch vom Zeitpunkt des Eisen(II)-Ionen-Zusatzes an, wird unter Inertgasabdeckung vorgenommen. Die Reaktionstemperatur sollte zwischen 20 und 80 °C betragen, wobei es sich als zweckmäßig erwiesen hat, bei Raumtemperatur zu arbeiten.

Nach dieser Ausfällung hydroxidischer Kobalt(II)- und Eisen(II)-haltiger Niederschläge in der Gamma-Eisen(III)-oxid-Suspension wird der gesamte Feststoffanteil abfiltriert und so lange mit Wasser gewaschen, bis das Waschwasser neutral reagiert. Der Filterkuchen wird dann ein bis sieben, vorzugsweise 2 bis 4 Stunden auf Temperaturen zwischen 100 und 220 °C, z. B. in einer Drehbirne bzw. einem Drehrohr, erhitzt. Mit dieser Temperaturbehandlung wird das in der beschriebenen Reaktion entstandene Produkt sowohl getrocknet als auch getempert, wobei dies sowohl im Inertgas als auch im Luftstrom geschehen kann. Auf diese Weise lassen sich die magnetischen Eigenschaften, insbesondere die Koerzitivfeldstärke des Endproduktes beeinflussen. Wird der Trocknungs- und Temperschritt im Inertgasstrom, üblicherweise im Stickstoffstrom, bei vorzugsweise Temperaturen zwischen 130 und 180 °C durchgeführt, so beträgt die Erhitzungsdauer zweckmäßigerweise zwei bis sieben Stunden. Bei einer Behandlung des Filterkuchens in oxidierender Atmosphäre, d. h. im Luftstrom, sind Temperaturen von 110 bis 150 °C während ein bis drei Stunden angebracht. Jedoch läßt sich dieser Verfahrensschritt auch derart durchführen, daß der Filterkuchen zuerst im Luftstrom bei 100 bis 120 °C getrocknet und dann unter Inertgas ein bis drei Stunden auf 130 bis 180 °C erhitzt wird.

Die nach dem erfindungsgemäßen Verfahren modifizierten nadelförmigen kobalthaltigen Eisenoxide zeichnen sich durch eine Reihe von Verbesserungen gegenüber Produkten nach dem Stand der Technik aus. So zeigen die nach diesem Verfahren hergestellten magnetischen Materialien eine höhere Koerzitivfeldstärke und eine engere Verteilung der Schaltfeldstärken. Auf die beschriebene Weise gelingt es somit, die vorteilhaften Eigenschaften des Gamma-Eisen(III)oxids mit denen des Magnetits und des Kobaltferrits zu kombinieren, ohne aber die Nachteile der letztgenannten, wie mangelnde Richtbarkeit, breite Schaltfeldstärkenverteilung, thermische Instabilität der magnetischen Eigenschaften sowie hohe Magnetostriktion in Kauf nehmen zu müssen.

Es sollte zweckmäßigerweise die Temperaturabhängigkeit der Koerzitivfeldstärke und der Remanenz derartiger kobalthaltiger Produkte möglichst wenig schlechter sein, als die des reinen Gamma-Eisen(III) oxids. Nur so wirken sich die verbesserten magnetischen Eigenschaften der kobalthaltigen magnetischen Materialien uneingeschränkt zur Verbesserung der Aufzeichnungs- und Wiedergabeeigenschaften von daraus hergestellten magnetischen Aufzeichnungsträgern aus. Die Temperaturabhängigkeit von Koerzitivfeldstärke und Remanenz wird als TA-Wert angegeben. Dabei werden Koerzitivfeldstärke und relative Remanenz bei −100° und bei +25 °C bestimmt, jeweils der Quotient gebildet und beide Ergebnisse angegeben. Undotiertes Gamma-Eisen(III)oxid besitzt beispielsweise einen TA-Wert bezüglich der Koerzitivfeldstärke von 1,2 und bezüglich der relativen Remanenz von 1,07.

Neben der Temperaturabhängigkeit der magnetischen Eigenschaften ist die Schaltfeldstärkenverteilung bei dem einzelnen Teilchen solcher magnetischen Materialien ein wesentliches Kriterium bei der Auswahl für die Herstellung magnetischer Aufzeichnungsträger. Die Verteilung der Schaltfeldstärken der einzelnen Teilchen wird aus der Gleichfeldentmagnetisierungskurve bestimmt. Hier sind bei der Feldstärke $H_R$, der sogenannten Remanenzkoerzitivfeldstärke bezüglich des Volumens die Hälfte der Teilchen ummagnetisiert. Damit stellt sie eine für Aufzeichnungsvorgänge charakteristische Größe dar, welche insbesondere den Arbeitspunkt bei der magnetischen Aufzeichnung bestimmt. Je uneinheitlicher die Remanenzkoerzitivfeldstärke der jeweils einzelnen magnetischen Teilchen in der Aufzeichnungsschicht ist, desto breiter ist die Verteilung der magnetischen Felder, welche ein begrenztes Volumen der Aufzeichnungsschicht ummagnetisieren können. Dies wirkt sich besonders dann aus, wenn wegen hoher Aufzeichnungsdichten bzw. geringen Wellenlängen der Grenzbereich zwischen entgegengesetzt magnetisierten Bereichen möglichst schmal sein sollte. Für die Charakterisierung der Verteilung der Schaltfeldstärken der einzelnen Teilchen bestimmt man aus der Gleichfeldentmagnetisierungskurve einen Wert $h_5$ für die Gesamtbreite der Remanenzkurve und $h_{25}$ für die Steilheit der Remanenzkurve. Die Werte werden bestimmt nach

$$h_5 = H_{95} - H_5/H_R$$

und

$$h_{25} = H_{75} - H_{25}/H_R$$

Der Zahlenindex beim Buchstaben H besagt, wieviel der Teilchen in Prozenten jeweils ummagnetisiert sind. Undotierte Gamma-Eisen(III)oxide weisen für $h_5/h_{25}$ Werte um 1,66/0,57 auf.

Die erfindungsgemäß hergestellten kobalthaltigen Eisenoxide besitzen somit neben einer angehobenen Koerzitivfeldstärke auch bezüglich der Temperaturbeeinflussung und der Werte für $h_5/h_{25}$ vorteilhafte Eigenschaften, wodurch sie sich besonders zum Einsatz für magnetische Aufzeichnungsträger eignen. Die Herstellung dieser Speichermedien geschieht in an sich bekannter Weise. Hierzu werden die magnetischen Materialien in polymeren Bindemitteln dispergiert. Als Bindemittel eignen sich die für diesen Zweck bekannte Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die Erfindung sei anhand nachfolgender Beispiele näher erläutert, wobei in einigen Beispielen anhand von Figuren die sich ergebende Abhängigkeit der Koerzitivfeldstärke von anderen Verfahrensparametern dargestellt sei.

Die magnetischen Werte der Materialien wurden in einem Schwingmagnetometer bei einer Feldstärke von 160 kA/m gemessen, und zwar die Koerzitivfeldstärke $H_c$ in kA/m, umgerechnet auf eine Stopfdichte von $\varphi = 1{,}2$ mg/mm$^3$ ($H_{c(\varphi=1{,}2)}$), die spezifische Remanenz $M_{r/\varphi}$ in nTm$^3$/g und die spezifische Sättigungsmagnetisierung $M_{m/\varphi}$ in nTm$^3$/g bzw. bei einem Meßfeld von 800 kA/m als $M_{s/\varphi}$ in nTm$^3$/g.

## Beispiel A1

12 kg eines nadelförmigen $\gamma$-Fe$_2$O$_3$ mit einem mittleren Länge-zu-Dicken-Verhältnis von 10,5 und einer $H_c$ von 24,3 kA/m werden in 24 l Wasser dispergiert. 1 716 g CoSO$_4 \cdot$ 7 H$_2$O, gelöst in 3,6 l Wasser, werden zugegeben. Danach werden 4 908 NaOH, gelöst in 6 l Wasser, zugegeben, wodurch die Temperatur auf 30 °C ansteigt. Unter Stickstoff-Abdeckung werden 4 620 g FeSO$_4 \cdot$ 7H$_2$O in 5,6 l Wasser gelöst, innerhalb 2 Stunden zugetropft. Bei Raumtemperatur wird noch 6 Stunden gerührt, die zähflüssige Suspension abfiltriert und so lange mit Wasser gewaschen, bis das Filtrat neutral reagiert. Der feuchte Filterkuchen wird bei 150 °C im Stickstoffstrom 2 Stunden in der Drehkugel getrocknet und getempert. Die erhaltenen Magnetwerte, die spezifische Oberfläche ($S_{N2}$) nach B.E.T. und der Magnetitgehalt sind in Tabelle 1 aufgeführt.

## Vergleichsversuch A2

3 kg nadelförmiges $\gamma$-Fe$_2$O$_3$ mit einem mittleren Länge-zu-Dickenverhältnis von 10,5 und einer $H_c$ von 24,3 kA/m werden in 30 l Wasser dispergiert. 364 g CoCl$_2 \cdot$ 6H$_2$O in 600 ml Wasser gelöst, werden in die Suspension gegeben und 1 Stunde gerührt. Anschließend werden 1 695 ml 48 %ige Natronlauge zugefügt und langsam 232 g Fe$^{2+}$-Ionen als technische FeCl$_2$-Lösung zugetropft. Nach 6 Stunden Rühren wird die Suspension abfiltriert und mit Wasser neutral gewaschen.

Der feuchte Filterkuchen wird bei 150 °C im Stickstoffstrom in einer Drehkugel 2 Stunden getrocknet und getempert. Die Meßergebnisse sind in Tabelle 1 aufgeführt.

(Siehe die Tabelle, Seite 6)

Tabelle 1

| Dotierung | Verhältnis Oxid:Wasser | Temp.-Behandlung | $S_{N_2}$ m²/g | $Fe_3O_4$ % | $H_c$ ($\delta$=1,2) | $M_{r/\rho}$ | $M_{m/\rho}$ | TA | $h_{25}$ |
|---|---|---|---|---|---|---|---|---|---|
| Bsp. A 1 3 % Co 7,7 % $Fe^{2+}$ | 1:2 | 150°C/N₂ 2 Std. | 18,5 | 20 | 52 | 48 | 84 | 1,20/1,60 | 0,46 |
| Vergl. Vers. A 2 3 % Co 7,7 % $Fe^{2+}$ | 1:10 | 150°C/N₂ 2 Std. | 16,4 | 15 | 38 | 42 | 79 | 1,20/1,70 | 0,56 |

### Beispiel B1

1 000 g nadelförmiges $\gamma$-Fe$_2$O$_3$ mit einem mittleren Längen-zu-Dickenverhältnis von 10,5 und einer H$_c$ von 24,3 kA/m werden in 2 l Wasser dispergiert. 20 g CoCl$_2$ · 6H$_2$O werden in wenig Wasser gelöst und unter Rühren der Suspension zugefügt. Dazu werden innerhalb von 10 Minuten 565 ml 48 %ige Natronlauge gegeben und 38 g Fe(II)ionen als technische FeCl$_2$-Lösung in 60 Minuten zugetropft. Die gesamte Reaktion verläuft unter Stickstoff-Abdeckung bei Raumtemperatur. Anschließend wird noch 6 Stunden gerührt, dann die Suspension abfiltriert und mit Wasser neutral gewaschen.

Der feuchte Filterkuchen wird in drei Teile zerlegt:

Teil B1/I wird im N$_2$-Strom 2 Stunden bei 180 °C,

Teil B1/II im N$_2$-Strom 2 Stunden bei 150 °C und Teil B

1/III im Luftstrom 2 Stunden bei 130 °C behandelt.

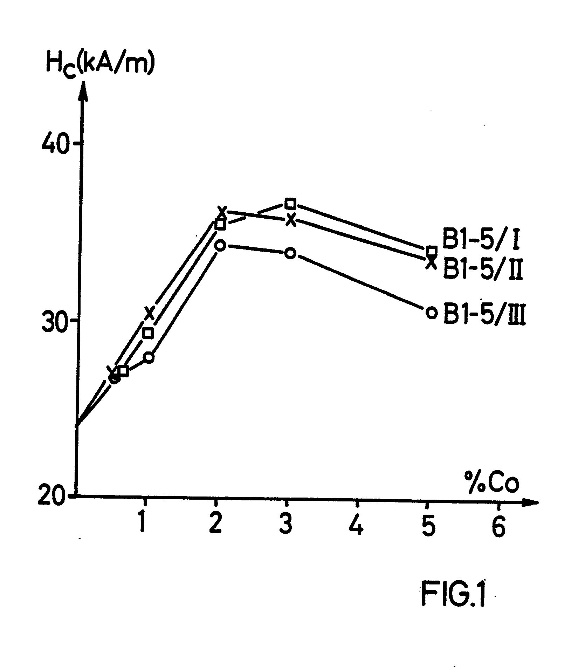

Die an den Proben B1/I bis B1/III bestimmten Koerzitivfeldstärken sind in Figur 1 wiedergegeben.

### Beispiele B2 bis B5

Es wird wie in Beispiel B1 verfahren, jedoch werden bei

Beispiel B2: 40 g CoCl$_2$ · 6H$_2$O

Beispiel B3: 80 g CoCl$_2$ · 6H$_2$O

Beispiel B4: 120 g CoCl$_2$ · 6H$_2$O

Beispiel B5: 200 g CoCl$_2$ · 6H$_2$O

der Suspension hinzugefügt. Der feuchte Filterkuchen wird jeweils in drei Teile zerlegt und entsprechend den Beispielen B1/I bis B1/III erhitzt. Die an diesen Proben dann bestimmten Koerzitivfeldstärken sind in Figur 1 wiedergegeben.

### Beispiel C1

1 000 g nadelförmiges $\gamma$-Fe$_2$O$_3$ mit einem mittleren Längen-zu-Dickenverhältnis von 10,5 und einer H$_c$ von 24,3 kA/m werden in 2 l Wasser dispergiert. 20 g CoCl$_2$ · 6H$_2$O, gelöst in wenig Wasser, werden unter heftigem Rühren und unter Stickstoff-Abdeckung der Suspension zugefügt. Dann werden 565 ml 48 %ige Natronlauge innerhalb von 10 Minuten zugegeben und anschließend 77 g Fe(II)ionen als technische FeCl$_2$-Lösung in 60 Minuten zugetropft. Der Reaktionskolben wird ständig unter einer Stickstoff-Abdeckung gehalten. Die Reaktion verläuft bei 25 °C. Nach Zugabe der FeCl$_2$-Lösung wird noch 6 Stunden weitergerührt, die Suspension abfiltriert und mit Wasser neutral gewaschen. Der feuchte Filterkuchen wird in drei Teile zerlegt, wobei

Teil C1/I     im Stickstoff-Strom 2 Stunden bei 150 °C,

Teil C1/II     im Luftstrom 2,5 Stunden bei 110 °C und dann noch 1 Stunde bei 150 °C im Stickstoff-Strom und

Teil C1/III     im Luftstrom 2 Stunden bei 130 °C behandelt werden.

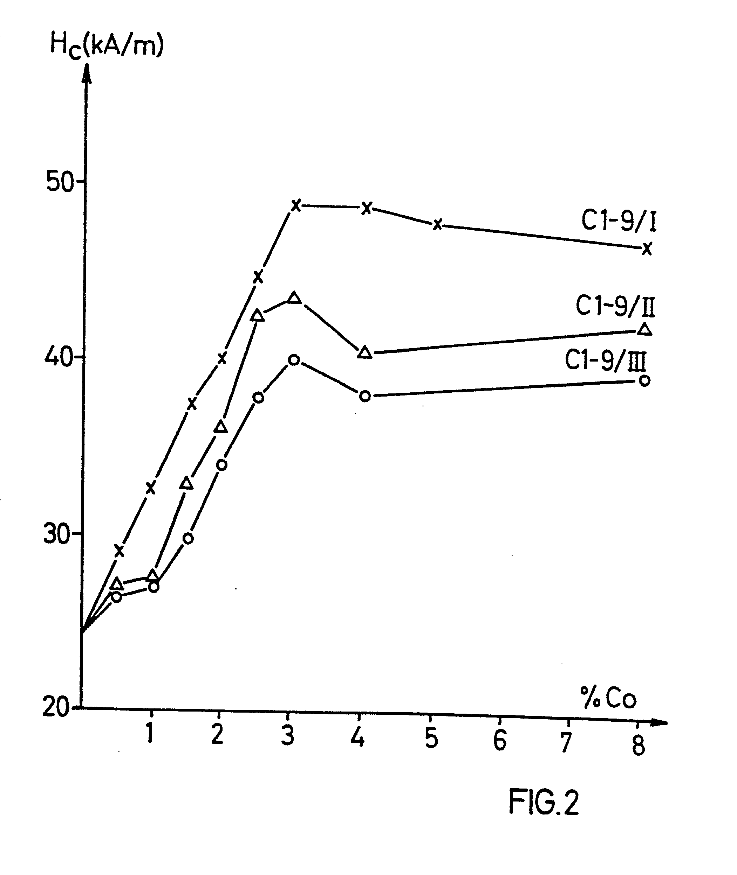

Die an den Proben C1/I bis C1/III gemessenen Koerzitivfeldstärken sind in Figur 2 dargestellt.

### Beispiele C2 bis C9

Es wird wie in Beispiel C1 verfahren, jedoch wird der Co-Gehalt erhöht, und zwar bei

Beispiel C2: 40 g CoCl$_2$ · 6H$_2$O

Beispiel C3: 60 g CoCl$_2$ · 6H$_2$O

Beispiel C4: 80 g CoCl$_2$ · 6H$_2$O

Beispiel C5: 100 g CoCl$_2$ · 6H$_2$O

Beispiel C6: 120 g CoCl$_2$ · 6H$_2$O

Beispiel C7: 160 g CoCl$_2$ · 6H$_2$O

Beispiel C8: 200 g CoCl$_2$ · 6H$_2$O

Beispiel C9: 320 g CoCl$_2$ · 6H$_2$O

### Beispiel E1

1 000 g nadelförmiges $\gamma$-Fe$_2$O$_3$ mit einem mittleren Längen-zu-Dickenverhältnis von 10, einer mittleren Nadellänge von 0,48 μm und einer Koerzitivkraft von 23,3 kA/m werden in 3 l Wasser dispergiert. In der Suspension werden unter Rühren und Stickstoff-Abdeckung bei 24 °C 20,2 g CoCl$_2$ · 6H$_2$O gelöst.

Nach einstündigem Rühren werden 550 ml 48 %ige Natronlauge und 50,7 ml einer technischen FeCl$_2$-Lösung, welche 10 g Fe(II)ionen enthält, zugetropft. Danach wird noch 6 Stunden weitergerührt, die Suspension abgesaugt und neutral gewaschen.

Der feuchte Filterkuchen wird in vier Teilen aufgeteilt, wobei

Teil E1/I     im Stickstoff-Strom 2 Stunden bei 120 °C,

Teil E1/II im Stickstoff-Strom 2 Stunden bei 150 °C und
Teil E1/III im Stickstoff-Strom 2 Stunden bei 130 °C behandelt werden.
Die Meßergebnisse sind in Tabelle 2 aufgeführt.

### Beispiel E2

Es wird wie in Beispiel E1 verfahren, jedoch werden die doppelten Mengen an Kobalt-und Eisen(II)-Verbindungen zugesetzt und ausgefällt. Die Ergebnisse sind in Tabelle 2 aufgeführt.

### Beispiel E3

Es wird wie in Beispiel E1 verfahren, jedoch werden die vierfachen Mengen an Kobalt- und Eisen(II)-Verbindungen eingesetzt und ausgefällt. Die Ergebnisse sind in Tabelle 2 aufgeführt.

### Tabelle 2

| Beispiel | Dotierung | Temp.-Behandlung | $H_{m/P}$ | $H_{r/P}$ | $\frac{H}{c}$ $(P=1.2)$ | $Fe_3O_4$-Gehalt |
|---|---|---|---|---|---|---|
| E 1/I | 0,5 % Co 1 % Fe(II) | $120^{\circ}C/N_2$, 2 h | 79 | 39 | 28,8 | 3,6 % |
| E 1/II | " | $150^{\circ}C/N_2$, 2 h | 78 | 39 | 29,0 | 7,4 % |
| E 1/III | " | $130^{\circ}C/N_2$, 2 h | 79 | 39 | 29,0 | 5,0 % |
| E 2/I | 1 % Co 2 % Fe(II) | $120^{\circ}C/N_2$, 2 h | 80 | 40 | 29,8 | 6,3 % |
| E 2/II | " | $150^{\circ}C/N_2$, 2 h | 82 | 41 | 30,7 | 11,3 % |
| E 2/III | " | $180^{\circ}C/N_2$, 2 h | 78 | 40 | 31,6 | 5,5 % |
| E 3/I | 2 % Co 4 % Fe(II) | $120^{\circ}C/N_2$, 2 h | 84 | 43 | 31,9 | 14,8 % |
| E 3/II | " | $150^{\circ}C/N_2$, 2 h | 82 | 42 | 33,0 | 12,0 % |
| E 3/III | " | $180^{\circ}C/N_2$, 2 h | 80 | 42 | 35,0 | 11,5 % |

### Beispiel G1

700 g nadelförmiges $\tau$-$Fe_2O_3$ mit einem mittleren Längen-zu-Dickenverhältnis von 10,6, einer mittleren Länge von 0,48 µm und einer $H_c$ von 24,1 kA/m wird in 2,8 l Wasser dispergiert. Die Suspension wird mit 84 g $CoCl_2 \cdot 6H_2O$ versetzt und eine Stunde gerührt. Unter Stickstoff-Abdeckung wird bei Raumtemperatur 395 ml 48 %ige Natronlauge zugegeben und anschließend 93 g Fe(II) als 513 ml technische $FeCl_2$-Lösung in die Suspension eingetropft. Es wird noch 6 Stunden heftig gerührt und hernach die Suspension abfiltriert und mit Wasser neutral gewaschen. Der feuchte Filterkuchen wird im Stickstoffstrom 2 Stunden bei 130 °C behandelt. Die erhaltenen Magnetpulverwerte und der Magnetitgehalt sind in Tabelle 3 enthalten.

### Vergleichsbeispiel G2

Es wird wie in Beispiel G1 verfahren, jedoch mit dem Unterschied, daß statt Fe(II)ionen 56,8 g Fe(III)ionen (berechnet auf 1 kg Ausgangsoxid) zugetropft werden. Der Filterkuchen wird wie in Beispiel G1 behandelt. Die Magnetpulverdaten und der Magnetitgehalt sind in Tabelle 3 aufgeführt.

### Vergleichsbeispiel G3

Es wird wie in Beispiel G1 verfahren, jedoch mit dem Unterschied, daß statt Fe(II)ionen 1,2 Mol $NaBH_4$, gelöst in 1 n NaOH, als Reduktionsmittel zugetropft wird. Die Temperaturbehandlung wird wie in Beispiel G1 durchgeführt. Die Magnetpulverdaten und der Magnetitgehalt sind in Tabelle 3 aufgeführt.

Tabelle 3

| Beispiel | Dotierung | Temperatur-Behandlung | $M_{m/\rho}$ | $M_{r/\rho}$ | $H_{(\rho=1,2)}$ | $Fe_3O_4$-Gehalt |
|---|---|---|---|---|---|---|
| G 1 | 3 % Co 13,3% Fe(II) | 130°C/N$_2$, 2h | 85 | 48 | 49,4 | 34,7 |
| Vergl.-Beispiel G 2 | 3 % Co 5,68% Fe(III) | 130°C/N$_2$, 2h | 78 | 39 | 28,2 | 4,5 |
| Vergl.-Beispiel G 3 | 3 % Co 1,2 Mol NaBH$_4$ | 130°C/N$_2$, 2h | 81 | 41 | 32,0 | 32,0 |

## Beispiel H

18 kg nadelförmiges Gammaeisen(III)oxid mit einem mittleren Längen-zu-Dicken-Verhältnis von 10,6, einer mittleren Länge von 0,48 μm und einer $H_c$ von 24,0 kA/m werden in 54 l Wasser dispergiert. Bei Raumtemperatur und unter Stickstoffabdeckung werden 3640,5 g CoCl$_2$ · 6H$_2$O, gelöst in wenig Wasser der Suspension zugegeben und eine Stunde gerührt. Dazu werden 10,6 l 48-prozantige Natronlauge innerhalb von 8 Minuten und anschließend 14,22 l 32,2-prozentige technische FeCl$_2$-Lösung (154 g Fe(II)/kg τ-Oxid) während zwei Stunden in die Suspension getropft und 6 Stunden unter Stickstoffabdeckung bei Raumtemperatur gerührt. Die Suspension wird abfiltriert und mit Wasser solange gewaschen, bis das Waschwasser neutral reagiert. Der feuchte Filterkuchen wird nun in sieben Teile zerlegt und unter den in Tabelle 4 angegebenen Bedingungen behandelt. In der Tabelle 4 sind auch der Magnetit-Gehalt und die magnetischen Eigenschaften aufgeführt.

Tabelle 4

| Beispiel | Temperaturbehandlung | $M_{m/\rho}$ | $M_{r/\rho}$ | $H_{c(\rho=1,2)}$ | $Fe_3O_4$-Gehalt |
|---|---|---|---|---|---|
| H/I | 150°C/N$_2$, 2 h | 79 | 45 | 54,1 | 28,4 % |
| H/II | 150°C/N$_2$, 7 h | 76 | 45 | 60,0 | 35,0 % |
| H/III | 100°C/Luft, 3 h und 150°C/N$_2$, 1 h | 80 | 46 | 52,4 | 30,0 % |
| H/IV | 120°C/Luft, 2,5 h und 150°C/N$_2$, 1 h | 78 | 44 | 49,6 | 19,5 % |
| H/V | 40°C/N$_2$, im Vakuum | 77 | 43 | 44,3 | 22,5 % |
| H/VI | 60°C/N$_2$, im Vakuum | 68 | 42 | 46,2 | 7,5 % |
| H/VII | 100°C/N$_2$, im Vakuum | 73 | 42 | 49,7 | 26,6 % |

## Beispiel J

1 000 g nadelförmiges τ-Fe$_2$O$_3$ mit einem mittleren Längen-zu-Dicken-Verhältnis von 10,5, einer mittleren Länge von 0,47 μm und einer $H_c$ von 24,2 kA/m werden in 2,5 l Wasser dispergiert. 323 g CoCl$_2$ · 6H$_2$O, werden in wenig Wasser gelöst und der Suspension zugesetzt. Die Reaktion wird bei 22 °C und unter Stickstoffabdeckung durchgeführt. Nach Zugabe des CoCl$_2$ · 6H$_2$O wird eine Stunde gerührt und dann 700 ml 48-prozentige Natronlauge der Suspension zugefügt. Anschließend werden unter heftigem Rühren 919 ml technische $FeCl_2$-Lösung (180 g Fe(II)ionen/kg Oxid) zugetropft. Es wird 6 Stunden nachgerührt, die Suspension wird abfiltriert und mit Wasser neutralgewaschen. Der feuchte Filterkuchen wird in sieben Teile zerlegt und wie in Tabelle 5 angegebenen getrocknet. In dieser Tabelle sind außerdem der Magnetit-Gehalt und die bei 800 kA/m gemessenen magnetischen Werte aufgeführt.

Tabelle 5

| Beispiel | Temperaturbehandlung | | $M_{m/g}$ | $M_{r/g}$ | $H_c$ ($g=1,2$) | $Fe_3O_4$-Gehalt |
|---|---|---|---|---|---|---|
| J/I | $120°C/N_2$, | 7 h | 96 | 48 | 58,8 | 35,8 % |
| J/II | $150°C/N_2$, | 2 h | 93 | 45 | 63,2 | 41,0 % |
| J/III | $150°C/Ar$, | 2 h | 83 | 40 | 63,4 | 29,4 % |
| J/IV | $150°C/N_2$, | 7 h | 83 | 42 | 60,0 | 37,7 % |
| J/V | $180°C/N_2$, | 1 h | 86 | 43 | 58,1 | 32,8 % |
| J/VII | $130°C/Luft$ | | 95 | 46 | 53,1 | 28,0 % |

## Beispiel K1

Mit einem gemäß Beispiel C3/III erhaltenen magnetischen Material wird ein magnetischer Aufzeichnungsträger hergestellt. Dazu werden 900 Teile dieses Materials in einer Stahlkugelmühle mit 225 Teilen einer 20-prozentigen Lösung eines Copolymerisats aus 80 % Vinylchlorid, 10 % Dimethylmaleinat und 10 % Diäthylmaleinat in einem Gemisch aus gleichen Teilen Tetrahydrofuran und Dioxan, 808 Teilen einer 13-prozentigen Lösung eines thermoplastischen Polyesterurethans aus Adipinsäure, 1,4-Butandiol und 4, 4'-Diisocyanatodiphenylmethan in einem Gemisch aus gleichen Teilen Tetrahydrofuran und Dioxan, 54 Teilen Sojalecithin, 0,9 Teilen eines handelsüblichen Silikonöls, 1,8 Teilen Hydrochinon, 1,8 Teilen Butylstearat, 9 Teilen Isostearinsäure und 620 Teilen des genannten Lösungsmittelgemisches gemischt und dispergiert. Danach wird die Dispersion mit 1,5 % 4,4'-Diisocyanatodiphenylmethan versetzt, filtriert und in bekannter Weise auf eine 6 μm dicke Polyäthylenterephthalatfolie in einer solchen Stärke aufgetragen, daß nach dem Ausrichten der nadelförmigen Teilchen durch Vorbeiführen an einem Magnetfeld und anschließendem Trocknen eine Magnetschicht in der in Tabelle 6 angegebenen Schichtstärke d verbleibt. Die magnetischen Eigenschaften, wie die Koerzitivfeldstärke $H_c$ [kA/m], Remanenz Mr [mT], Sättigung [mT], Richtfaktor RF, d. h. der Quotient aus Remanenz längs zur Vorzugsrichtung zu der Remanenz quer dazu, und $h_{25}$-Wert werden in einem Meßfeld von 800 kA/m bestimmt und sind in Tabelle 6 aufgeführt, ebenso die an einem aus der beschichteten Folie geschnittenen Magnetband in Anlehnung an DIN 45512 gegen die jeweiligen Bezugsbänder bei einer Aufzeichnung von 10 kHz gemessenen elektroakustischen Eigenschaften, wie Höhenaussteuerbarkeit $A_H$ und Höhenempfindlichkeit $E_H$.

## Beispiel K2

900 Teile eines gemäß Beispiel H/I hergestellten Materials werden in einer Stahlkugelmühle zusammen mit 225 Teilen einer 20-prozentigen Lösung eines Copolymerisats aus 80 % Vinylchlorid, 10 % Dimethylmaleinat und 10 % Diäthylmaleinat in einem Gemisch aus gleichen Teilen Tetrahydrofuran und Dioxan, 1008 Teilen einer 13-prozentigen Lösung eines thermoplastischen Polyesterurethans aus Adipinsäure, 1,4-Butandiol und 4,4'-Diisocyanatodiphenylmethan im selben Lösungsmittelgemisch, 22,5 Teile Zinkoleat, 0,9 Teile eines handelsüblichen Siliconöls und weiteren 890 Teilen des vorhandenen Lösungsmittelgemisches gemischt und dispergiert. Verarbeitung der resultierenden Dispersion zum Magnetband und Messung der magnetischen und elektroakustischen Eigenschaften geschieht in der bei Beispiel K1 beschriebenen Weise. Die Ergebnisse sind in Tabelle 6 aufgeführt.

## Beispiel K3

Es wird wie in Beispiel K2 beschrieben verfahren, jedoch wird als magnetisches Material ein gemäß Beispiel J/VI hergestelltes eingesetzt. Die Ergebnisse sind in Tabelle 6 aufgeführt.

## Beispiel K4

Es wird wie in beispiel K2 beschrieben verfahren, jedoch wird als magnetisches Material ein gemäß Beispiel AI hergestelltes eingesetzt. Die Ergebnisse sind in Tabelle 6 aufgeführt.

### Vergleichsversuch K5

Es wird wie in Beispiel K2 beschrieben verfahren, jedoch wird als magnetisches Material ein gemäß Vergleichsversuch A2 hergestelltes eingesetzt. Die Ergebnisse sind in Tabelle 6 aufgeführt.

Tabelle 6

| Beispiel | d $[\mu m]$ | $H_c [kA/m]$ | $Mr [mT]$ | $Ms [mT]$ | RF | $h_{25}$ | Bezugsband nach DIN | $A_{\parallel} [dB]$ | $E_{\parallel} [dB]$ |
|---|---|---|---|---|---|---|---|---|---|
| K1 | 4,5 | 30,8 | 150 | 190 | 2,5 | 0,31 | T 308 S | +3,0 | +2,5 |
| K2 | 4,6 | 61,7 | 154 | 200 | 1,8 | 0,30 | C 401 R | +4,6 | +2,8 |
| K3 | 4,8 | 79,2 | 141 | 188 | 1,7 | 0,30 | C 401 R | +8,0 | +3,7 |
| K4 | 4,6 | 55,4 | 163 | 203 | 2,1 | 0,29 | C 401 R | +4,2 | +2,5 |
| Vergl. Vers. K5 | 4,6 | 41,2 | 146 | 190 | 2,2 | 0,32 | C 401 R | −1,2 | −0,7 |

**Ansprüche**

1. Verfahren zur Herstellung von nadelförmigen magnetischen Eisenoxiden, bestehend aus einem Kern aus Gamma-Eisen(III)oxid und einer diesen Kern umgebenden, bezogen auf die Menge an magnetischem Material, 0,2 bis 12 Gewichtsprozent Kobalt(II)- und 0,1 bis 15 Gewichtsprozent Eisen(II)-Ionen enthaltenden ferritischen Hülle durch Zugabe von Basen in eine wäßrige Kobalt(II)- und Eisen(II)-Ionen enthaltenden Suspension von Gamma-Eisen(III)oxid, Erhitzen der Suspension, Abfiltrieren und Auswaschen des Feststoffanteils der Suspension sowie anschließendes Trocknen und Tempern, dadurch gekennzeichnet, daß ein Gewichtsteil nadelförmiges Gamma-Eisen(III)oxid durch intensives Rühren in nicht mehr als vier Gewichtsteilen Wasser suspendiert, dieser Suspension unter Inertgasabdeckung bei einer Temperatur von 20 bis 80 °C Kobalt(II)- und Eisen(II)-Ionen enthaltende wäßrige Lösungen, sowie wäßrige Basen zur Einstellung eines pH-Wertes von mindestens 10 unter weiterem Rühren zugegeben werden und nach dem unter Inertgasatmosphäre stattfindenden Ausfällen des hydroxidischen Kobalt(II)- und Eisen(II)-Niederschlags der gesamte Feststoffanteil abfiltriert, mit Wasser neutral gewaschen und während ein bis sieben Stunden auf eine Temperatur zwischen 100 und 220 °C erhitzt wird.

2. Verfahren zur Herstellung von nadelförmigen magnetischen Eisenoxiden, bestehend aus einem Kern aus Gamma-Eisen(III)oxid und einer diesen Kern umgebenden, bezogen auf die Menge an magnetischem Material, 0,2 bis 12 Gewichtsprozent Kobalt(II)- und 0,1 bis 15 Gewichtsprozent Eisen(II)-Ionen enthaltenden ferritischen Hülle durch Zugabe von Basen in eine wäßrige Kobalt(II)- und Eisen(II)-Ionen enthaltenden Suspension von Gamma-Eisen(III)oxid, Erhitzen der Suspension, Abfiltrieren und Auswaschen des Feststoffanteils der Suspension sowie anschließendes Trocknen und Tempern, dadurch gekennzeichnet, daß ein Gewichtsteil nadelförmiges Gamma-Eisen(III)oxid durch intensives Rühren in nicht mehr als vier Gewichtsteilen Wasser suspendiert, dieser Suspension bei einer Temperatur von 20 bis 80 °C eine Kobalt(II)-Ionen enthaltende wäßrige Lösung, sowie wäßrige Basen zur Einstellung eines pH-Wertes von mindestens 10 zugesetzt, dann unter weiterem Rühren in Inertgasatmosphäre eine Eisen(II)-Ionen enthaltende wäßrige Lösung eingebracht wird und nach dem unter Inertgasatmosphäre stattfindenden Ausfällen des hydroxidischen Kobalt(II)- und Eisen(II)-Niederschlags der gesamte Feststoffanteil abfiltriert, mit Wasser neutral gewaschen und während ein bis sieben Stunden auf eine Temperatur zwischen 100 und 220 °C erhitzt wird.

**Claims**

1. A process for the manufacture of acicular magnetic iron oxide which consists of a core of gamma-iron(III)oxide surrounded by a ferrite shell containing, based on the amount of magnetic material, from 0.2 to 12 per cent by weight of cobalt(II)ions and from 0.1 to 15 per cent by weight of iron(II)ions, by adding a base to an aqueous suspension, containing cobalt(II) and iron(II)ions, of gamma-iron(III)oxide, heating the suspension, filtering off and washing the solids content of the suspension, and subsequently drying and heating the solid product, wherein one part by weight of acicular gamma-iron(III)oxide is suspended in not more than four parts by weight of water by vigorous stirring, aqueous solutions containing cobalt(II)ions and iron(II)ions, and aqueous bases to bring the pH to not less than 10 are added to this suspension at from 20 to 80 °C under an inert gas blanket, with continued stirring, and after the cobalt(II)hydroxide and iron(II)hydroxide precipitate has formed under the inert gas atmosphere the entire solid product is filtered off, washed neutral with water and heated for from one to seven hours at from 100 to 220 °C.

2. A process for the manufacture of acicular magnetic iron oxide which consists of a core of gamma-iron(III)oxide surrounded by a ferrite shell containing, based on the amount of magnetic material, from 0.2 to 12 per cent by weight of cobalt(II)ions and from 0.1 to 15 per cent by weight of iron(II)ions, by adding a base to an aqueous suspension, containing cobalt(II) and iron(II)ions, of gamma-iron(III)oxide, heating the suspension, filtering off and washing the solids content of the suspension, and subsequently drying and heating the solid product, wherein one part by weight of acicular gamma-iron(III)oxide is suspended in not more than four parts by weight of water by vigorous stirring, an aqueous solution containing cobalt(II)ions, and aqueous bases to bring the pH to not less than 10 are added to this suspension at from 20 to 80 °C, thereafter an aqueous solution containing iron(II)ions is introduced with continued stirring under an inert gas atmosphere, and after the cobalt(II)hydroxide and iron(II)hydroxide precipitate has formed under the inert gas atmosphere the entire solid product is filtered off, washed neutral with water and heated for from one to seven hours at from 100 to 220 °C.

## Revendications

1. Procédé de préparation d'oxydes de fer magnétiques aciculaires, constitués d'un noyau en oxyde de fer(III)- et d'une enveloppe ferritique, entourant ce noyau et contenant, rapportés à la quantité de matière magnétique, 0,2 à 12 % en poids d'ions cobalt(II) et 0,1 à 15 % en poids d'ions fer(II), par addition de bases dans une suspension aqueuse d'oxyde de fer(III)-γ, contenant des ions cobalt(II) et des ions fer(II), chauffage de la suspension, séparation par filtration et lavage de la partie solide de la suspension, ainsi que séchage et recuit, caractérisé par le fait qu'une partie en poids d'oxyde de fer(III)-γ aciculaire est mise en suspension, sous agitation intense, dans au plus quatre parties en poids d'eau ; à cette suspension sont ajoutées, en poursuivant l'agitation, sous atmosphère de gaz inerte et à une température de 20 à 80 °C, des solutions aqueuses contenant des ions cobalt(II) et fer(II) ainsi que des bases aqueuses pour régler le pH à une valeur au moins égale à 10, puis, après la précipitation, s'opérant sous atmosphère de gaz inerte, du dépôt hydroxydique de cobalt(II) et fer(II), toute la partie solide est filtrée, lavée à neutralité avec de l'eau, et chauffée, pendant une à sept heures, à une température comprise entre 100 et 220 °C.

2. Procédé de préparation d'oxydes de fer magnétiques aciculaires, constitués d'un noyau en oxyde de fer(III)-γ et d'une enveloppe ferritique, entourant ce noyau et contenant, rapportés à la quantité de matière magnétique, 0,2 à 12 % en poids d'ions cobalt(II) et 0,1 à 15 % en poids d'ions fer(II), par addition de bases dans une suspension aqueuse d'oxyde de fer(III)-γ, contenant des ions cobalt(II) et des ions fer(II), chauffage de la suspension, séparation par filtration et lavage de la partie solide de la suspension ainsi que séchage et recuit, caractérisé par le fait qu'une partie en poids d'oxyde de fer(III)-γ aciculaire est mise en suspension, sous agitation intense, dans au plus quatre parties en poids d'eau ; à cette suspension, est ajoutée, à une température de 20 à 80 °C, une suspension aqueuse contenant des ions cobalt(II) ainsi que des bases aqueuses pour régler le pH à une valeur au moins égale à 10 ; puis, en poursuivant l'agitation, est introduite, sous atmosphère de gaz inerte, une solution aqueuse contenant des ions fer(II), et après la précipitation, s'opérant sous atmosphère de gaz inerte, du dépôt hydroxydique de cobalt(II) et fer(II), toute la partie solide est filtrée, lavée à neutralité avec de l'eau, et chauffée, pendant une à sept heures, à une température comprise entre 100 et 220 °C.

FIG.1

FIG.2